# EUROPEAN PATENT APPLICATION

(11) **EP 1 883 063 A1**
(43) Date of publication of application: **30.01.2008**
(21) Application number: 07106927.2
(22) Date of filing: 25.04.2007
(51) Int. Cl.: G09G 5/00

(54) **Image display device and image display method**

(30) Priority: 27.07.2006 KR 20060071025
(71) Applicant: Samsung Electronics Co., Ltd., Suwon-si 442-742 Gyeonggi-do (KR)
(72) Inventor: Lee, Bong-geun, Suwon-si, Gyeonggi-do (KR)
(74) Representative: Waddington, Richard

(57) **Abstract**

An image display device and an image display method, in which the display position of an image frame on a display screen changes in order to enhance the image quality, are provided. The image display device according to the exemplary embodiment of the present invention includes a decoder (130) that decodes an input image signal; and a frame display controller (150) which alternately outputs the decoded input image signal and an image signal obtained by delaying the decoded input image signal by a predetermined number of lines of one frame. The display position of the image frame on the display screen may change so that the image quality of a low-resolution image or an image having excessive noise is enhanced.

## Description

The present invention relates to an image display device and an image display method, and more particularly, to an image display device and an image display method, in which the display position of an image frame on a display screen changes in order to enhance the image quality.

In the field of high-quality image display devices, such as digital televisions (TVs), there has been a considerable amount of research into ways of improving the resolution of display panels, and enhancing the image quality using various image processing technologies.

In order to display an image having a different resolution from the display panel of the image display device on the display panel, the format of the image signal needs to be converted to a signal format suitable for the display panel. For example, if an image signal having a resolution of 720×480 pixels is displayed on a display panel having a resolution of 1280×720 pixels, a scaler of the image display device enlarges the image signal having a low resolution (720×480 pixels) in vertical and horizontal directions to convert the format of the image signal to a signal format suitable for the display panel having a high resolution (1280×720 pixels). When the low-resolution image is scaled and displayed on a high-resolution display panel in the manner discussed above, the image quality is lower than when the same image is displayed on a low-resolution display panel. Additionally, in an image display device, when an image quality enhancement process is performed on a low-resolution image having excessive noise, the noise is recognized as a portion of the image to display errors more prominently, and the image quality is deteriorated.

Therefore, there is a need for an improved method for reducing deterioration of the image quality caused by displaying a low-resolution image on a high-resolution display panel of the image display device, or caused by excessive noise.

Exemplary embodiments of the present invention address the above disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Preferred features of the invention will be apparent from the dependent claims, and the description which follows.

According to an aspect of the present invention, there is provided an image forming device including a decoder that is operable to decode an input image signal; and a frame display controller, which is operable to alternately output the decoded input image signal and an image signal obtained by delaying the decoded input image signal by a predetermined number of lines of one frame.

The predetermined number may be 1 or 2.

The frame display controller may be operable to periodically and alternately output the input image signal and the delayed image signal.

Additionally, the frame display controller may include a signal delayer which may be operable to produce the delayed image signal obtained by delaying the input image signal by the predetermined number of lines; and a signal selector which may be operable to select either the delayed image signal or the input image signal.

The image display device may further include a controller which may be operable to control operation of the frame display controller based on the amount of noise or errors contained in the input image signal.

The controller may be operable to compare the amount of noise or errors to a predetermined critical level. If the amount of noise or errors is lower than the critical level, the controller may be operable to control the frame display controller to output only the input image signal.

In addition, the image display device may further include a switch which may be operable to selectively output either the image signal output from the frame display controller or the image signal input to the frame display controller; and a controller which may be operable to compare the amount of noise or errors contained in the input image signal to a predetermined critical level and to control the switch so that it outputs the image signal input to the frame display controller if the amount of noise or errors is lower than the critical level, and to output the image signal output from the frame display controller if the amount of noise or errors is equal to or higher than the critical level.

Furthermore, the image display device may further include a mapper which may be operable to adjust the image frame of the image signal output from the frame display controller so that the image frame is displayed on the display screen upward from the top of the screen by the predetermined number of lines.

The image display device may further include a scaler which may be operable to convert the input image signal to an image signal of a signal format suitable for a resolution of a display panel.

According to an another aspect of the present invention, there is provided an image display method that includes decoding an input image signal; delaying the decoded input image signal by a predetermined number of lines of one frame; and alternately outputting the input image signal and the delayed image signal.

According to another aspect of the present invention, there is provided an image display method that includes a) reading a first image frame among a plurality of stored image frames to output the first image frame; and b) reading a second image frame, subsequent to the first image frame to output the second image frame after a predetermined time interval has elapsed after outputting the first image frame. Steps a) and b) are repeatedly performed for image frames which are subsequent to the second image frame, so that the display position of the image frame on a display screen changes.

According to still another aspect of the present invention, there is provided an image display method that includes a) reading a first image frame among a plurality of stored image frames from a first line to output the first image frame; and b) reading a second image frame, subsequent to the first image frame, from an (N+1) th line (where N is 1 or more) to output the second image frame after output of the first image frame. Steps a) and b) are repeatedly performed for image frames which are subsequent to the second image frame, so that the display position of the image frame on a display screen changes.

For a better understanding of the invention, and to show how embodiments of the same may be carried into effect, reference will now be made, by way of example, to the accompanying diagrammatic drawings in which:
FIG. 1 is a block diagram illustrating an image display device according to an exemplary embodiment of the present invention;
FIG. 2 is a block diagram illustrating a constitution of a frame display controller shown in FIG. 1;
FIG. 3 is a view explaining an image display device according to another exemplary embodiment of the present invention;
FIG. 4 is a view explaining an image display device according to still another exemplary embodiment of the present invention;
FIGs. 5A and 5B are views explaining an image quality enhancement principle according to exemplary embodiments of the present invention;
FIG. 6 is a flowchart explaining an image display method according to an exemplary embodiment of the present invention;
FIG. 7 is a flowchart explaining an image display method according to another exemplary embodiment of the present invention; and
FIG. 8 is a flowchart explaining an image display method according to still another exemplary embodiment of the present invention.

Throughout the drawings, the same drawing reference numerals will be understood to refer to the same elements, features and structures.

The matters defined in the description such as a detailed construction and elements are provided to assist in a comprehensive understanding of the embodiments of the invention and are merely exemplary. Accordingly, those of ordinary skill in the art will recognize that various changes and modifications of the exemplary embodiments described herein can be made without departing from the scope and spirit of the invention. Also, descriptions of well-known functions and constructions are omitted for clarity and conciseness.

Hereinafter, exemplary embodiments of the present invention will be described in detail with reference to the accompanying drawings.

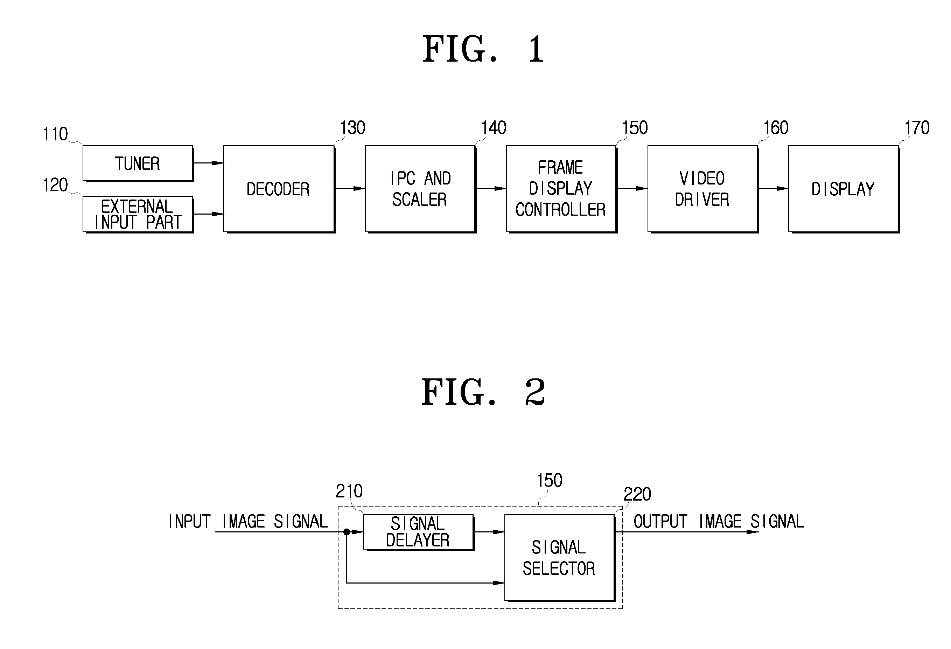

FIG. 1 is a block diagram illustrating an image display device according to an exemplary embodiment of the present invention. The image display device may be a digital TV, but is not limited thereto. FIG. 1 shows elements relating to the description of an exemplary embodiment of the present invention among various functional elements constituting the image display device.

The image display device in FIG. 1 includes a tuner 110, an external input part 120, a decoder 130, an Interlace to Progressive Converter (IPC) and scaler 140, a frame display controller 150, a video driver 160, and a display 170.

The tuner 110 selects one signal from among radio frequency (RF) signals received with an antenna.

The external input part 120 receives a signal from an audio-visual (AV) terminal, a component terminal, a High Definition Multimedia Interface (HDMI) terminal, a personal computer (PC) input, or the like.

The decoder 130 decodes image signals input from the tuner 100 and the external input part 120 according to the characteristics of the signals. If a digital broadcast signal encoded in an MPEG-2 format is input from the tuner 110, MPEG decoding is performed. If an image signal encoded in another format is input from the external input part 120, the image signal is decoded by a decoding method corresponding to the encoding method of the signal.

The IPC and scaler 140 converts the format of the input image signal to a signal format suitable for the display.

The IPC converts an interlace signal input to the image forming device to a progressive signal. However, if the image signal input to the image forming device is a progressive signal, the IPC does not need to function. The scaler converts input image signals having various resolutions to signal formats suitable for the resolution of the display.

The frame display controller 150 processes the image signal output from the IPC and scaler 140 and controls the position of the image frame displayed on the display. The constitution and operation of the frame display controller 150 are described in detail below with reference to FIG. 2.

The video driver 160 displays the image output from the frame display controller 150 on the display.

The display 170, which may be a liquid crystal display (LCD), a plasma display panel (PDP) or another type of display device, is driven by the video driver 160 and displays the image.

FIG. 2 is a block diagram illustrating in detail the constitution of the frame display controller of the image display device in detail according to an exemplary embodiment of the present invention. The frame display controller 150 in FIG. 2 consists of a signal delayer 210 and a signal selector 220.

The signal delayer 210 delays the input image signal by N lines of one frame. The signal delayer 210 may comprise a line delay memory, which delays the input image signal by one line or two lines and outputs the signal.

The signal selector 220 alternately outputs the image signal which is not delayed and the image signal delayed by N lines through the signal delayer 210 according to the frame period. The signal selector 220 may comprise a switch, which selects the input image signal and the image signal delayed through the signal delayer 210 according to the frame period.

Accordingly, the frame display controller 150 outputs the image signal which is not delayed and the delayed image signal in sequence according to the frame period and inputs the signals to the video driver 160.

Therefore, in the display 170, a frame of the image signal, which is not delayed, is displayed at the standard position, and a frame of the delayed image signal is displayed at a position that is downward from the top of the screen by N lines.

Additionally, according to an exemplary embodiment of the present invention, a part that receives image signals from the frame display controller 150, for example, the video driver 160, may function as a mapper (not shown), which maps the image frame output from the frame display controller 150 so that the image frame is displayed on the display screen upward from the top of the screen by N lines of one frame. In other words, if the image frame is displayed on the display screen upward from the top of the screen by N lines of one frame by mapping the frame in the video driver 160, the frame of the delayed image signal is displayed at the standard position, and the frame of the image signal which is not delayed is displayed at a position that is upward from the top of the screen by N lines.

Therefore, according to an exemplary embodiment of the present invention, the general image frame and the image frame spaced from the top of the screen by N lines are alternately displayed on the screen of the display. In the exemplary embodiment of the present invention, the frame display controller selects the delayed image signal and the image signal which is not delayed according to the frame period and outputs the image signals. However, the frame display controller may be constituted to output image frames at integral multiples (for example, double or triple) of the frame period. In addition, the frame display controller may output the delayed image signal and the image signal which is not delayed according to frame periods that differ with respect to one another.

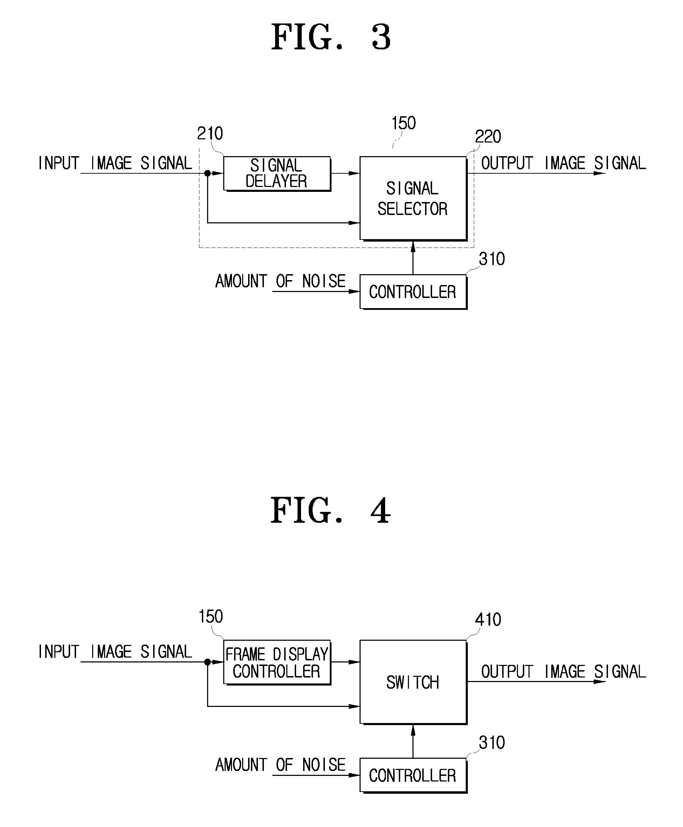

FIG. 3 is a view explaining an image display device according to another exemplary embodiment of the present invention. As shown, the image display device of FIG. 3 further includes a controller 310 in addition to the frame display controller 150 shown in FIG. 2. Illustration of elements other than the frame display controller of the image display device shown in FIG. 1 is omitted in FIG. 3.

The controller 310 controls operation of the frame display controller 150 based on the amount of noise or errors contained in the image signal. Specifically, the decoder 130 of the image display device measures the amount of noise or errors in the image signal in order to provide the measured value to the controller 310. The controller 310 compares the measured amount of noise or errors in the image signal to a previously defined critical level. As a result, if the amount of noise or errors is equal to or higher than the critical level, the controller 310 controls the signal selector 220 so that it alternately outputs the delayed image signals and the image signals that are not delayed. If the amount of noise or errors is lower than the critical level, the controller 310 controls the signal selector 220 so that it outputs only the image signals which are not delayed.

FIG. 4 is a view explaining an image display device according to still another exemplary embodiment of the present invention. As shown, the image display device of FIG. 4 further comprises a controller 310 and a switch 410 in addition to the frame display controller 150 shown in FIG. 2. Illustration of elements other than the frame display controller of the image display device shown in FIG. 1 is omitted in FIG. 4.

The switch 410 selectively outputs the image signal input to the frame display controller 150 and the image signal output from the frame display controller 150.

The controller 310 controls operation of the switch 410 based on the amount of noise or errors contained in the image signal. Specifically, the decoder 130 of the image display device measures the amount of noise or errors in the image signal and provides the measured value to the controller 310. The controller 310 compares the measured amount of noise or errors in the image signal to a previously defined critical level. As a result, if the amount of noise or errors is equal to or higher than the critical level, the controller 310 controls the switch 410 so that it outputs the image signal output from the frame display controller 150. If the amount of noise or errors is lower than the critical level, the controller 310 controls the switch 410 so that it outputs the image signal input to the frame display controller 150.

By the image display devices shown in FIGS. 3 and 4, the function of the frame display controller 150 can be selectively controlled in accordance with the amount of noise or errors contained in the image signal.

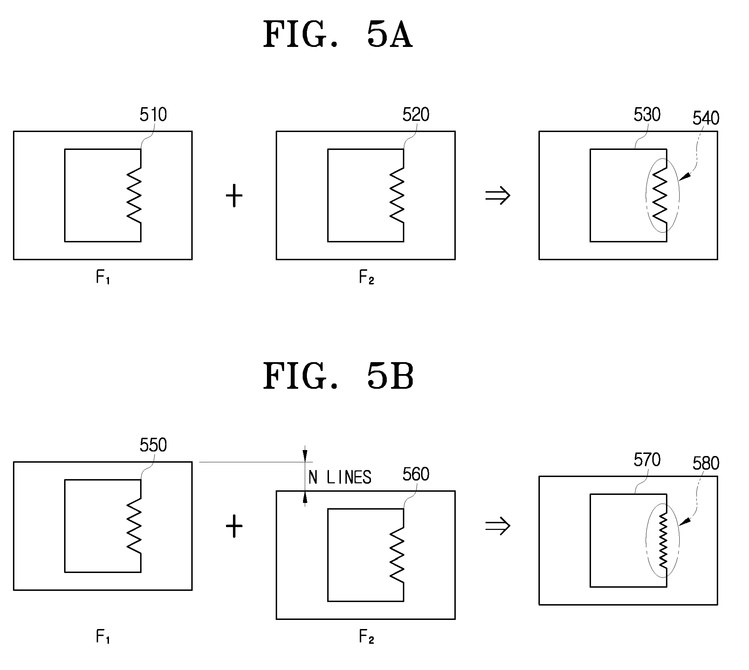

FIGs. 5A and 5B are views explaining an image quality enhancement principle of an image display method according to exemplary embodiments of the present invention compared to a conventional image display method. In FIGs. 5A and 5B, frames F1 and F2 indicate frames displayed on the screen in chronological order. Zigzag patterns on images 510, 520, 550 and 560 within the frames F1 and F2 are portions where outlines or errors of the images having noise appear prominently when the images are enlarged when a low-resolution image is displayed on a high-resolution display panel.

FIG. 5A shows steps for displaying an image frame on the display screen according to the conventional method. Using the conventional method, the display positions of the frames F1 and F2 are fixed on the screen, so that the zigzag patterns on the images 510 and 520 are displayed at the same position as those of the frames F1 and F2, respectively. Accordingly, a zigzag pattern 540 on a synthetic image 530 is clearly observed.

FIG. 5B shows operations for displaying an image frame on the screen by the image display method according to exemplary embodiments of the present invention. In FIG. 5B, the first frame F1 indicates the image frame, which is not delayed and is output from the frame display controller 150 of FIG. 2; the size of the frame matches the screen. The second frame F2 indicates the image frame, which is delayed by N lines and is output by the frame display controller 150; the frame is displayed at a position downward from the top of the screen by N lines. According to the exemplary embodiment of the present invention, the screen alternately displays at high speed the general first frame F1, which is not delayed, and the second frame F2, which is displayed downward from the top of the screen by N lines. Accordingly, the zigzag patterns on the images 550 and 560 are offset by a residual image effect so that the zigzag patterns appear smaller to the human eyes.

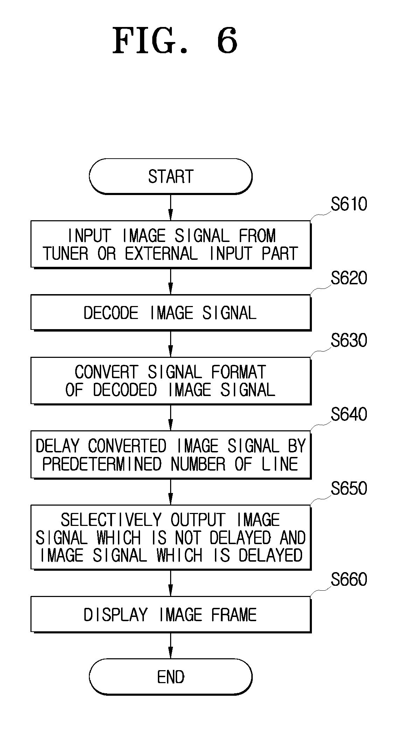

FIG. 6 is a flowchart explaining an image display method according to an exemplary embodiment of the present invention.

The image signal is input to the image display device through a tuner or an external input apparatus (S610).

The input image signal is decoded through a decoder according to the encoding characteristics of the signal (S620).

If the input image signal is an interlace scanning signal, the signal is converted to a progressive signal by the IPC. The progressive signal is converted by the scaler to a signal format suitable for the resolution of the display panel (S630).

A signal delayer delays the format-converted image signal by a predetermined number of lines of one frame (S640).

A signal selector alternately outputs an image signal which is not delayed and a delayed image signal according to the frame period (5650).

A frame of the image signal which is not delayed and a frame of the delayed image signal are alternately displayed on a display (S660).

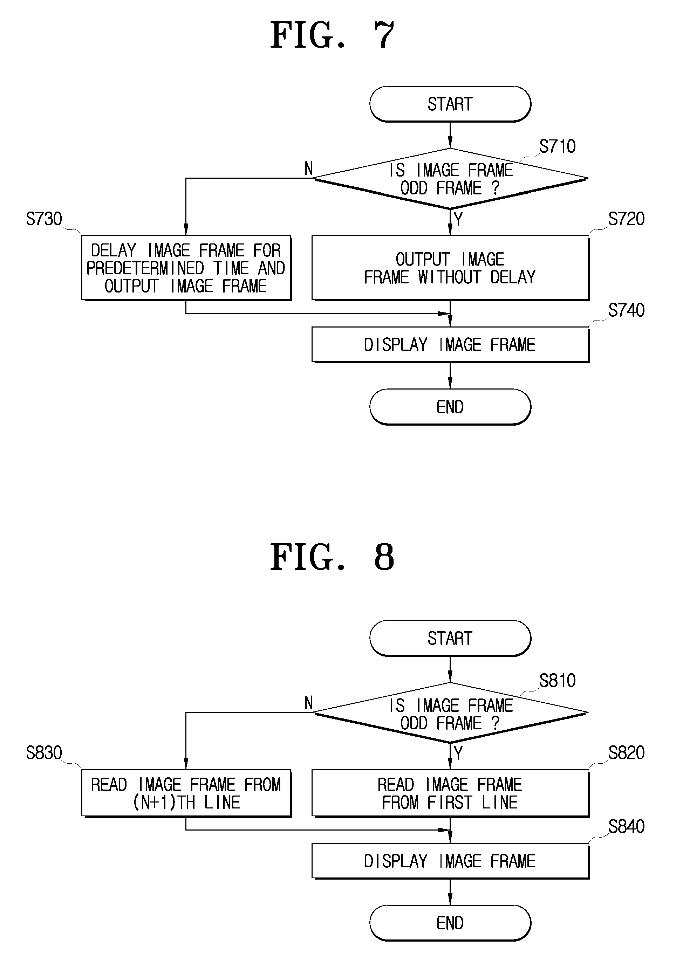

FIG. 7 is a flowchart explaining an image display method according to another exemplary embodiment of the present invention. The method of FIG. 7 includes controlling the output timing of the image frames from a memory (not shown) that stores the image frames and displaying the frames.

In this exemplary embodiment, when the image signal stored in the memory is divided into frame units, odd frames are read from the memory so that they are output without delay, and even frames are delayed for a time appropriate for the predetermined number of lines of one frame and then read from the memory so that they are output with a delay.

Referring to FIG. 7, if an image frame among the image frames stored in the memory is an odd frame (S710; Y), the frame is read from a first line to be output without delay (5720). If the image frame is an even frame (S710; N), the frame is delayed for a time appropriate for the predetermined number of lines of one frame, and then read from the first line to be output (S730). Additionally, in this exemplary embodiment, it is possible to output the even frame without delay and output the odd frame after a delay.

FIG. 8 is a flowchart explaining an image display method according to still another exemplary embodiment of the present invention. The method of FIG. 8 includes adjusting the read position of an image frame from a memory storing the image frames, to display the frame.

In this exemplary embodiment, when the image signal stored in the memory is divided into frame units, odd frames are read from the first line to be output, and even frames are read from the (N+1)th line (where N is 1 or more) to be output.

Referring to FIG. 8, if an optional image frame among the image frames stored in the memory is an odd frame (S810; Y), the frame is read from the first line to be output (S820). If the image frame is an even frame (S810; N), the frame is read from the (N+1) th line to be output (S830). Additionally, in this exemplary embodiment, it is possible to read the even frame from the first line and read the odd frame from the (N+1) th line to be output.

According to the display methods of FIGS. 7 and 8, consecutive image frames are alternately displayed on a display screen with a difference of N lines in a vertical direction between them, so that the zigzag patterns on the images are offset according to the theory explained in FIG. 3. Therefore, it is possible to enhance the image quality.

As described above, according to exemplary embodiments of the present invention, the image quality, which deteriorates due to the image being scaled so that the low-resolution image displayed on the high-resolution display panel can be enhanced by changing the display position of the image frame on the display screen.

Additionally, according to exemplary embodiments of the present invention, it is possible to improve the quality of the image, which deteriorates due to excessive noise.

As aforementioned, the exemplary embodiments of the present invention are shown and described, but the present invention is not limited to the specific embodiments described above, and can be implemented in various modifications by those skilled in the art to which the present invention pertains without departing from the scope of the invention as defined by the appended claims and the full scope of equivalents thereof.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image display device comprising:
a decoder (130), which is operable to decode an input image signal; and
a frame display controller (150), which is operable to alternately output the decoded input image signal and an image signal obtained by delaying the decoded input image signal by a predetermined number of lines of one frame.

2. The device as claimed in claim 1, wherein the predetermined number is 1 or 2.

3. The device as claimed in claim 1 or claim 2, wherein the frame display controller (150) is operable to periodically and alternately output the input image signal and the delayed image signal.

4. The device as claimed in any preceding claim, wherein the frame display controller (150) comprises:
a signal delayer (210) which is operable to produce the delayed image signal obtained by delaying the input image signal by the predetermined number of lines; and
a signal selector (220) which is operable to select either the delayed image signal or the input image signal.

5. The device as claimed in any preceding claim, further comprising a controller (310) which is operable to control operation of the frame display controller (150) based on the amount of noise or errors contained in the input image signal.

6. The device as claimed in claim 5, wherein the controller (310) is operable to compare the amount of noise or errors to a predetermined critical level and to control the frame display controller (150) so that it outputs only the input image signal if the amount of noise or errors is lower than the critical level.

7. The device as claimed in any preceding claim, further comprising:
a switch (410) which is operable to selectively output either the image signal output from the frame display controller (150) or the image signal input to the frame display controller (150); and
a controller (310) which is operable to compare an amount of noise or errors contained in the input image signal to a predetermined critical level and to control the switch (410) so that it outputs the image signal input to the frame display controller (150) if the amount of noise or errors is lower than the critical level, and to output the image signal output from the frame display controller (150) if the amount of noise or errors is equal to or higher than the critical level.

8. The device as claimed in any preceding claim, further comprising a mapper which is operable to adjust the image frame of the image signal output from the frame display controller (150) so that the image frame is displayed on the display screen upward from the top of the screen by the predetermined number of lines.

9. The device as claimed in any preceding claim, further comprising a scaler (140) which is operable to convert the input image signal to an image signal of a signal format suitable for a resolution of a display panel.

10. An image display method, comprising:
decoding an input image signal;
delaying the decoded input image signal by a predetermined number of lines of one frame; and
alternately outputting the input image signal and the delayed image signal.

11. The method as claimed in claim 10, wherein the predetermined number is 1 or 2.

12. The method as claimed in claim 10 or claim 11, wherein alternately outputting the image signals comprises periodically and alternately outputting the input image signal and the delayed image signal.

13. The method as claimed in any one of claims 10 to 12, further comprising controlling the output of image signals based on the amount of noise or errors contained in the input image signal.

14. The method as claimed in claim 13, wherein controlling the output of image signals comprises comparing the amount of noise or errors to a predetermined critical level and outputting only the input image signal if the amount of noise or errors is lower than the critical level.

15. The method as claimed in any one of claims 10 to 14, further comprising:
selectively outputting either an image signal output by alternately outputting the input image signal and the delayed image signal, or the input image signal; and
comparing an amount of noise or errors contained in the input image signal to a predetermined critical level and outputting the input image signal if the amount of noise or errors is lower than the critical level, and outputting the image signal output by alternately outputting the signals if the amount of noise or errors is equal to or higher than the critical level.

16. The method as claimed in any one of claims 10 to 15, further comprising adjusting an image frame of the output image signal to be displayed on a display screen upward from the top of the screen by the predetermined number of lines.

17. The method as claimed in any one of claims 10 to 16, further comprising converting the input image signal to an image signal of a signal format suitable for a resolution of a display panel.

18. An image display method, comprising:
a) reading a first image frame among a plurality of stored image frames to output the first image frame; and
b) reading a second image frame, subsequent to the first image frame, to output the second image frame after a predetermined time interval has elapsed after outputting the first image frame,
wherein operations a) and b) are repeatedly performed for image frames which are subsequent to the second image frame, so that the display position of the image frames on a display screen changes.

19. The method as claimed in claim 18, wherein the predetermined time interval is a time it takes to display one line or two lines of one image frame.

20. An image display method, comprising:
a) reading a first image frame among a plurality of stored image frames from a first line and outputting the first image frame; and
b) reading a second image frame, subsequent to the first image frame, from an (N+1) th line (where N is 1 or more) and outputting the second image frame after outputting of the first image frame,
wherein operations steps a) and b) are repeatedly performed for image frames which are subsequent to the second image frame, so that the display position of the image frame on a display screen changes.
